# EUROPEAN PATENT APPLICATION

(11) **EP 4 675 917 A1**
(43) Date of publication of application: **07.01.2026**
(21) Application number: 24883586.0
(22) Date of filing: 10.09.2024
(51) Int. Cl.: H02S 10/20, H02S 50/00, G05F 1/67, H02J 3/22, H02J 7/35, H01H 50/16

(54) **PHOTOVOLTAIC POWER GENERATION SYSTEM IN WHICH ENERGY STORAGE SYSTEM AND PHOTOVOLTAIC MODULE ARE LINKED AND CONTROL METHOD THEREOF**

(30) Priority: 09.05.2024 KR 20240061071
(71) Applicant: Hanwha Solutions Corporation, Jung-gu Seoul 04541 (KR)
(72) Inventor: LEE, Joon Min, Seoul 04541 (KR); HYUN, Dong Yub, Seoul 04541 (KR); KO, Tae Hoon, Seoul 04541 (KR); AHN, Min Ho, Seoul 04541 (KR); LIM, Sang Min, Seoul 04541 (KR)
(74) Representative: Mooser, Sebastian Thomas
(86) International application number: PCT/KR2024/013711
(87) International publication number: WO 2025/234539

(57) **Abstract**

In a photovoltaic power generation system in which an energy storage system and a PV module are linked, and a method of controlling the same, there may be provided the photovoltaic power generation system including a PV module configured to produce power, an energy storage system (ESS) configured to perform first communication with the PV module, and a server configured to perform second communication with the PV module and the ESS, wherein at least one of the ESS, the PV module, and the power grid is further configured to allow a load to import power.

## Description

### Technical Field

The present disclosure relates to a photovoltaic power generation system in which an energy storage system and a photovoltaic(PV) module are linked, and a method of controlling the same, and more specifically, to a photovoltaic power generation system in which an energy storage system and a PV module are linked, and a method of switching a control entity corresponding to a load by using the same.

### Background Art

Photovoltaic power generation is a power generation technology that may produce power through a process of collecting energy directly from the sun and converting the collected energy into electricity while generating little pollution. Therefore, photovoltaic power generation is gaining attention as eco-friendly power generation for sustainable energy and is rapidly growing.

Meanwhile, most grid-connected photovoltaic power generation systems are systems in which, through a connection with a power grid, a central control entity controls a load to use power of the power grid according to a power generation situation of PV modules or perform a control such that power remaining after satisfying the load is exported to the power grid. However, there is a problem in that the load may not be satisfied when the central control entity is inoperable.

The aforementioned background technology is technical information possessed by the inventor for derivation of the present disclosure or acquired by the inventor during the derivation of the present disclosure, and is not necessarily prior art disclosed to the public before the application of the present disclosure.

### Disclosure

### Technical Problem

The present disclosure is directed to providing a photovoltaic power generation system in which an energy storage system and a PV module are linked, and a method of controlling the same. The objects to be solved by the present disclosure are not limited to the technical objects described above, and other technical objects which are not described may be clearly understood by a person having ordinary skill in the art from the description of the present disclosure and will be more clearly understood through the embodiments of the present disclosure. In addition, it will be appreciated that the objects and advantages to be solved by the present disclosure may be realized by means and combinations thereof shown in the claims of the patent.

### Technical Solution

As the means for solving the above technical objects, a first aspect of the present disclosure may provide a photovoltaic power generation system including a PV module configured to produce power, an energy storage system (ESS) configured to perform first communication with the PV module, and a server configured to perform second communication with the PV module and the ESS, wherein at least one of the ESS, the PV module, and the power grid is further configured to allow a load to import power.

A second aspect of the present disclosure may provide a method of controlling the photovoltaic power generation system, the method including detecting first load power imported by the load by the PV module, charging power with which the PV module charges a battery included in the ESS, and export power exported to the power grid by the PV module, detecting charging power for charging the battery and second load power imported by the load by discharging the battery, and controlling the system based on at least one of the first load power, the charging power, the export power, the charging power, and the second load power.

A third aspect of the present disclosure may provide a device for controlling a photovoltaic power generation system, the device including a memory in which at least one program is stored, and a processor configured to perform a calculation by executing the at least one program, wherein the processor is further configured to detect first load power imported to a load by a PV module, charging power with which the PV module charges a battery included in an energy storage system, and export power exported to a power grid by the PV module, detect a charging power for charging the battery and second load power imported by the load by discharging the battery, and control the system based on at least one of the first load power, the charging power, the export power, the charging power, and the second load power.

In addition, other methods for implementing the present disclosure, other devices, and a computer-readable recording medium on which a computer program for executing the method is stored may be further provided.

Other aspects, features, and advantages other than those described above will become apparent from the following drawings, claims, and detailed description of the present disclosure.

### Advantageous Effects of the present disclosure

According to the technical solutions to the problem of the present disclosure described above, it is possible to doubly respond to a situation in which a central controller of a photovoltaic power generation system is failed or inoperable.

In addition, according to the technical solutions to the problem of the present disclosure described above, there may be provided a photovoltaic power generation system capable of flexibly responding to a connection with an external system for the purpose of massive energy storage or the like.

The effects of the embodiments are not limited to the effects described above, and other effects which are not described will be clearly understood by a person having ordinary skill in the art from the description of the present disclosure.

### Description of Drawings

FIG. 1 is a diagram illustrating a flow of power according to an embodiment of the present disclosure.
FIGS. 2 to 4 are exemplary diagrams of an implementation environment of a photovoltaic power generation system according to an embodiment of the present disclosure.
FIG. 5 is a diagram for describing a power flow of a PV module and an energy storage system according to an embodiment of the present disclosure.
FIG. 6 is a diagram for describing a process of transmitting or receiving data between a PV module and an energy storage system according to an embodiment of the present disclosure.
FIG. 7 is a diagram for describing a first operation mode according to an embodiment of the present disclosure.
FIG. 8 is a diagram for describing a second operation mode according to an embodiment of the present disclosure.
FIG. 9 is an exemplary diagram of implementation of a device for controlling a photovoltaic power generation system according to an embodiment of the present disclosure.
FIG. 10 is a flowchart of a method of controlling a photovoltaic power generation system according to an embodiment of the present disclosure.

### Mode of Disclosure

In describing the present disclosure, when it is determined that the specific description of the known related art unnecessarily obscures the gist of the present disclosure, the detailed description thereof will be omitted. Unless otherwise defined, all terms used herein have the same meaning as commonly understood by one of ordinary skill in the art to which the present disclosure belongs.

The phrases "according to an embodiment," "relating to an embodiment," or "according to one embodiment" as used herein are not necessarily all referring to the same embodiment.

Since the embodiments can apply various transformations and have various forms, some embodiments will be illustrated in the drawings and described in detail in the detailed description. However, it should be understood that this is not intended to limit the embodiments to specific embodiments, and includes all modifications, equivalents, and substitutes included in the spirit and scope of the embodiments. The terms used herein are merely used to describe the embodiments and are not intended to limit the embodiments.

Although general terms as currently widely used as possible are selected as the terms used in the embodiments while taking functions in the present embodiments into account, they may vary according to an intention of those of ordinary skill in the art, judicial precedents, or the appearance of new technology. In addition, in specific cases, terms intentionally selected by the applicant may be used, and in this case, the meaning of the terms will be disclosed in corresponding description of the present disclosure. Accordingly, the terms used in the embodiments should be defined not by simple names of the terms but by the meaning of the terms and the content over the embodiments.

Some embodiments of the present disclosure may be represented by functional block configurations and various processing operations. Some or all of the functional blocks may be implemented in various numbers of hardware and/or software configurations that perform particular functions. For example, the functional blocks of the present disclosure may be implemented by one or more microprocessors or by circuit configurations for a given function.

In addition, for example, the functional blocks of the present disclosure may be implemented in various programming or scripting languages. The functional blocks may be implemented in an algorithm executed by one or more processors. In addition, the present disclosure may adopt the related art for electronic configuration, signal processing, and/or data processing.

Terms, such as "database," "element," "means," and "configuration" may be used widely and are not limited to mechanical and physical configurations. In addition, the term "-unit," "-module," or the like implies a unit of processing at least one function or operation and may be implemented in hardware or software or in combination of the hardware and the software.

Furthermore, connecting lines or connection members between components shown in the drawings are intended to represent functional connections and/or physical or logical connections. In an actual device, connections between components may be represented by various alternative or additional functional connections, physical connections, or circuit connections.

In addition, terms "ordinal numbers" such as "first" and "second" may be used to describe various components, but the components should not be limited by the terms. The above terms are used only to distinguish one component from another.

In addition, some of the components in the drawings may be illustrated with exaggerated sizes or proportions. In addition, the components shown in one figure may not be shown on another figure.

Since "embodiments" described in the specification are classified arbitrarily only for the purpose of describing the inventions, the embodiments should not be construed to be exclusive to each other. For example, components disclosed in an embodiment may be applied to or implemented in other embodiments. Also, it is possible to change the components for applying or implement those components in other embodiments within scope and spirit of the present disclosure.

In addition, the terms used in the present disclosure are for the purpose of describing embodiments and are not intended to limit the embodiments. In the present disclosure, singular forms also include plural forms unless specifically stated otherwise.

Hereinafter, embodiments of the present disclosure will be described in detail with reference to the accompanying drawings so that a person skilled in the art can easily implement the present disclosure. However, the embodiments of the present disclosure may be implemented in various different forms and are not limited to the embodiments described in the present disclosure.

Hereinafter, the present disclosure will be described in detail with reference to the accompanying drawings based thereon.

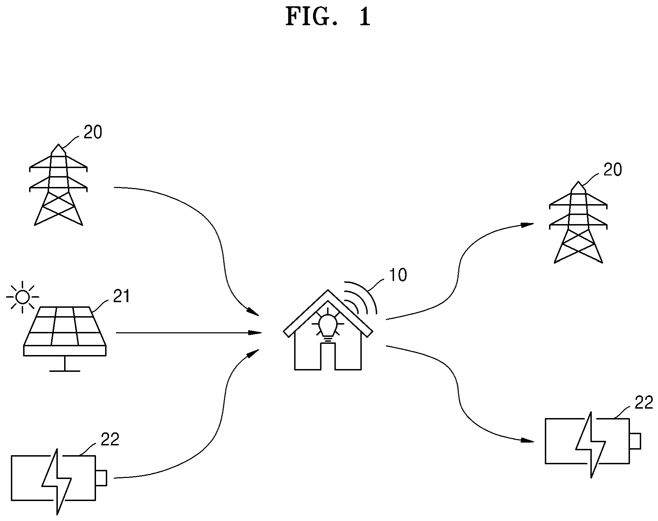

FIG. 1 is a diagram illustrating a flow of power according to an embodiment of the present disclosure.

Electric power (hereinafter referred to as power) refers to electrical energy imported to a load 10 per unit time.

Referring to FIG. 1, power may be imported by the load 10 from at least one of a power grid 20, a PV module 21, and an energy storage system 22.

The load 10 refers to an object that consumes power. For example, the load 10 may be a device that requires electricity by being installed in an electricity consumer such as a house, a commercial facility, or a factory. Specifically, when an electricity consumer importing power is a house, the load 10 may include a refrigerator, a washing machine, an electric heating appliance, or the like installed in the house.

The power grid 20 is an infrastructure system for generating, transmitting, and distributing power, and includes a power plant, a substation, a power line, and the like. Electricity generated in the power plant of the power grid 20 may be imported by the load 10 and/or the energy storage system 22.

The PV module 21 is a device that converts photovoltaic energy into electrical energy and includes a PV panel, a PV cell, and the like. As an example, the PV module 21 may absorb photovoltaic energy through the PV panel, may photoelectrically transform the absorbed photovoltaic energy into electrical energy through a microinverter, and may transmit the electrical energy to an output terminal. A daily power generation amount may vary according to the weather or amount of sunlight, and the PV module 21 may continuously generate power during periods of sunshine so that a storage device such as the energy storage system 22 may be required.

The energy storage system 22 stores at least a portion of electrical energy, which is produced by the power grid 20 and/or the PV module 21, for use as needed. Since electrical energy is stored during times when electricity demand is low and is used during times when electricity demand is high later, the energy storage system 22 may be used to improve the stability of the power grid 20 and maintain consistency in electricity supply. That is, the load 10 may import power by discharging a battery included in the energy storage system 22.

The surplus power remaining after the demand power of the load 10 is satisfied may be exported to the power grid 20 or the energy storage system.

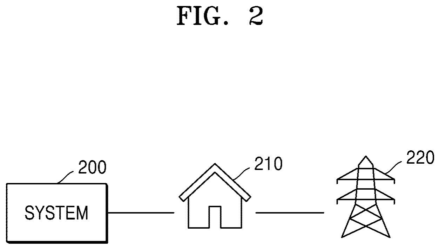

FIGS. 2 to 4 are exemplary diagrams of an implementation environment of a photovoltaic power generation system according to an embodiment of the present disclosure.

Referring to FIG. 2, a photovoltaic power generation system 200 (hereinafter referred to as "system") according to an embodiment may include the PV module and energy storage system described above with reference to FIG. 1.

In an embodiment, the system 200 may include the PV module that generates power, the energy storage system that communicates with the PV module, and a server that communicates with the PV module and the energy storage system. In this case, a protocol through which the PV module and the energy storage system communicate with each other may be different from a protocol through which the PV module, the energy storage system, and the server communicate with each other. This will be described below.

In an embodiment, a load 210 may import power from the system 200. Specifically, the load 210 may import power from at least one of the energy storage system, the PV module, and a power grid.

As an example, electrical energy generated by the PV module may charge a battery of the energy storage system and may be imported by the load 210, and remaining surplus power may be exported to a power grid 220. On the other hand, the battery of the energy storage system may be discharged only to allow the load 210 to import power and may be configured not to export power to the power grid 220.

In an embodiment, the server of the system 200 may transmit a control signal for controlling the import of power to the load 210 and the power grid 220 from the energy storage system and the PV module and may receive data, which is for monitoring a real-time state, from the energy storage system and the PV module. In addition, the server may analyze the received data to predict future operation situations and thus may establish power production plans. Through such data exchange, the server may optimize the performance of the energy storage system and the PV module and may provide functions of monitoring and controlling the system 200.

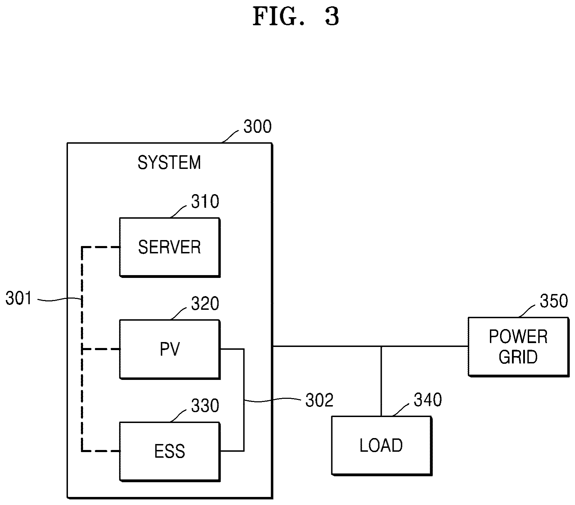

Referring to FIG. 3, a photovoltaic power generation system 300 (hereinafter referred to as "system") may include a server 310, a PV module 320, and an energy storage system 330.

In an embodiment, the system 300 may import power from a power grid 350 and may export surplus power, which remains after power is imported to a load 340, to the power grid 350.

In an embodiment, the PV module 320 and the energy storage system 330 may perform control to generate a power supply signal for importing power to the load 340. In addition, the PV module 320 and the energy storage system 330 may control a power generation amount of the PV module 320. Furthermore, the PV module 320 and the energy storage system 330 may perform control to charge or discharge a battery included in the energy storage system 330 by using surplus power.

In an embodiment, the system 300 may be configured such that the server 310 transmits a control signal to the PV module 320 and the energy storage system 330 to adjust a power generation amount of the PV module 320 or a charge/discharge amount of the energy storage system 330.

In another embodiment, the system 300 may be configured such that any one of the PV module 320 and the energy storage system 330 becomes a control entity, and the other thereof becomes a control target. For example, the system 300 may be configured to switch the control entity between the PV module 320 and the energy storage system 330 as needed.

As an example, the PV module 320 and the energy storage system 330 may perform first communication 302. For example, the first communication may be controller area network (CAN) communication. The CAN communication is a standard communication specification designed for microcontrollers and devices to communicate with each other without a host computer and is mainly used for in-vehicle communication. Accordingly, the CAN communication may be performed between the PV module 320 and the energy storage system 330 in an environment without a host called the server 310, thereby enabling stable and rapid communication. However, the first communication 302 is not limited to the CAN communication, and various communications such as serial communication interface (SCI), serial peripheral interface (SPI), and Ethernet may be applied.

As an example, the server 310 may perform second communication 301 with the PV module 320 and the energy storage system. For example, the second communication may be Ethernet communication. The Ethernet communication is a standard communication for computer networks and is mainly used in wired local area networks (LANs). Due to use of a standardized protocol, Ethernet may be highly compatible and easy to interface with various equipment and software so that, when the server 310 becomes a central control entity, the server 310 may communicate with the PV module 320 and the energy storage system 330 through an Ethernet network. However, the second communication 301 is not limited to the Ethernet communication, and various communications such as CAN, SCI, and SPI may be applied.

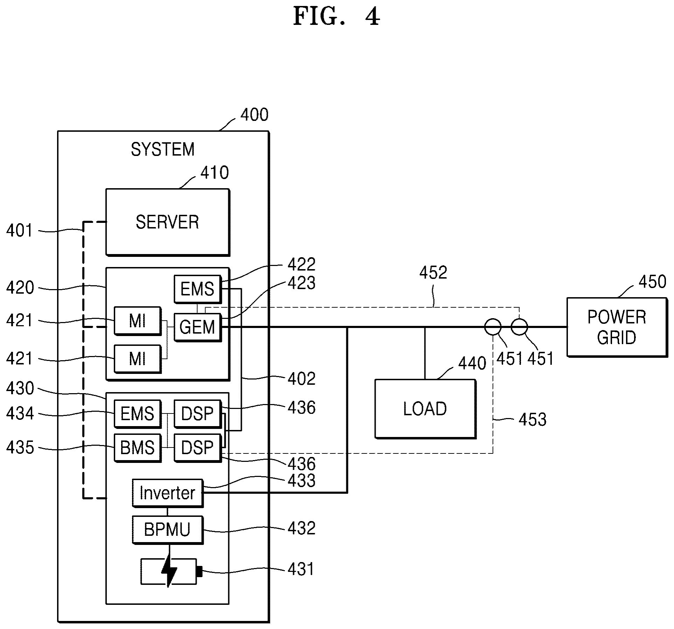

Referring to FIG. 4, a system 400 may include a PV module 420 that generates power, an energy storage system 430 that performs first communication 402 with the PV module 420, and a server 410 that performs second communication 401 with the PV module 420 and the energy storage system 430.

In an embodiment, the PV module 420 may include one or more microinverters 421 that photovoltaically transform photovoltaic energy absorbed by a PV panel (not shown) into electrical energy. The microinverter 421 may be connected to an alternating current (AC) combiner including a gateway energy manager (GEM) module 423 and an energy management system (EMS) 422.

In this case, electrical energy photoelectrically transformed by the microinverter 421 may be output to a load 440 and a power grid 450 through the GEM 423. In addition, the EMS 422 may import output power as state information and may transmit the state information to the energy storage system 430 through the first communication 402 or transmit the state information to the server 410 through the second communication 401.

In an embodiment, the energy storage system 430 may include a battery 431 that stores power generated by the PV module 420, a battery pack management unit (BPMU) 432 that monitors a voltage, a current, a temperature, and the like inside the battery 431 and manages charging and discharging, and an inverter 433 that converts direct current (DC) power stored in the battery 431 into AC power. The AC power converted by the inverter 433 may be output to the load 440 and the power grid 450.

In addition, the energy storage system 430 may further include an EMS 434, a battery management system (BMS) 435, and a digital signal processor 436. The EMS 434 and the BMS 435 may be connected to the digital signal processor 436 and may transmit or receive state information of the battery 431 to or from the battery 431 and the digital signal processor 436. The digital signal processor 436 may receive a charge amount, a discharge amount, or the like of the battery 431 as state information and may transmit the state information to the PV module 420 through the first communication 402 or transmit the state information to the server 410 through the second communication 401.

Meanwhile, one or more current transformers (CTs) 451 may be disposed between the load 440 and the power grid 450. The CT 451 may sense and measure a current flowing to the power grid 450. The CT 451 may be connected to the GEM 423 of the PV module 420 and/or the digital signal processor 436 of the energy storage system 430. Accordingly, the PV module 420 and the energy storage system 430 may control a photovoltaic power generation amount generated by the PV panel (not shown) and charging/discharging of the battery 431 based on an amount of surplus power exported to the power grid 450.

Meanwhile, in an embodiment, the server 410 may be connected to the EMS 422 included in the PV module 420 and the EMS 434 included in the energy storage system 430 to perform the second communication 401. In addition, in an embodiment, the EMS 422 included in the PV module 420 may be connected to the digital signal processor 436 included in the energy storage system 430 to perform the first communication 402.

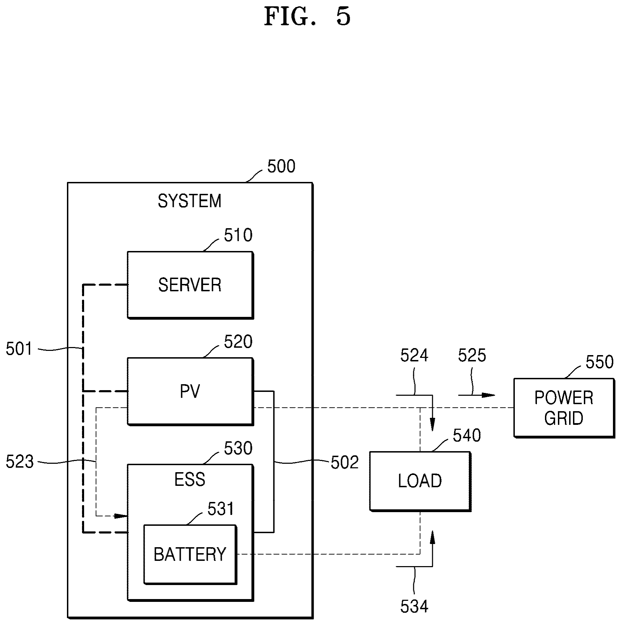

FIG. 5 is a diagram for describing a power flow of a PV module and an energy storage system according to an embodiment of the present disclosure.

Referring to FIG. 5, a system 500 may include a server 510 that communicates with a PV module 520 and an energy storage system 530 through first communication 501, and the PV module 520 and the energy storage system 530 that communicate with each other through second communication 502.

In an embodiment, generated power generated by the PV module 520 may include first load power 524 imported to a load 540, charging power 523 exported to a battery 531 included in the energy storage system 530, and export power 525 exported to a power grid 550.

As an example, the generated power generated by the PV module 520 may be distributed in the order of the first load power 524, the charging power 523, and the export power 525. Specifically, the PV module 520 may first distribute the load power 524 to the load 540 and then may determine whether to distribute the remaining generated power as the charging power 523 based on an charge amount of the battery 531. For example, when the charge amount of the battery 531 is sufficient, the PV module 520 may distribute power, which remains after satisfying the load 540, as the export power 525 to export power to the power grid 550, and when the charge amount is insufficient, the PV module 520 may distribute power, which remains after satisfying the load 540, as the charging power 523 to charge the battery 531. However, there is no restriction on the order in which the generated power is distributed as the first load power 524, the charging power 523, and the export power 525.

In an embodiment, the battery 531 of the energy storage system 530 may be charged based on the charging power 523 and may be discharged based on second load power 534 imported by the load 540.

In another embodiment, although not shown in FIG. 5, the battery 531 of the energy storage system 530 may also be discharged to export power to the power grid 550.

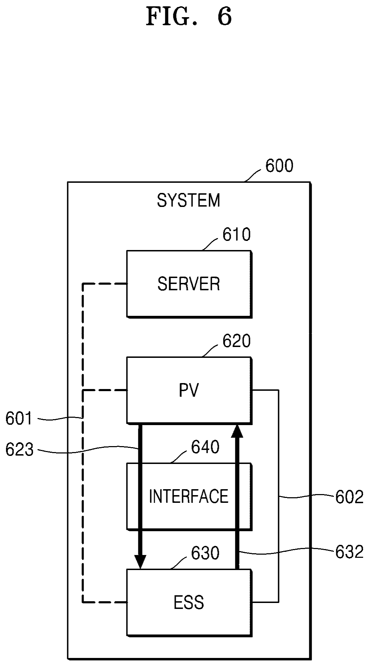

FIG. 6 is a diagram for describing a process of transmitting or receiving data between a PV module and an energy storage system according to an embodiment of the present disclosure.

Referring to FIG. 6, a system 600 may include a server 610, a PV module 620, and an energy storage system 630 and may further include an interface 640 for first communication 602 between the PV module 620 and the energy storage system 630.

In an embodiment, the interface 640 may serve as an interface for the first communication 602 and may support standard and extended functions of the first communication 602 and may provide a software application programming interface (API). As an example, when the first communication 602 is CAN communication, the interface 640 may be connected to a CAN bus to mediate data transmission or reception and may provide a function of enabling a user to control the CAN communication through the software API. Thus, the interface 640 may mediate data transmission or reception between the PV module 620 and the energy storage system 630.

In addition, although not shown in FIG. 6, the system 600 may include an interface (not shown) for second communication 601.

Meanwhile, the system 600 may have a dual structure in which a control entity may be switched between the PV module 620 and the energy storage system 630 as needed. That is, the system 600 may achieve a dual structure through the first communication 602 described above and the second communication 602 different from the first communication 602.

On the other hand, in a system including both the PV module 620 and the energy storage system 630 as components, when the server 610 is connected to the PV module 620 and thus only the PV module 620 serves as a control entity, there is a problem in that it may not deal with a situation in which an EMS (not shown) of the PV module 620 is inoperable or a situation in which communication with the server 610 is impossible. Likewise, even when the server 610 is connected to the energy storage system 630 and thus only the energy storage system 630 serves as the control entity, the same problem occurs. Therefore, there is a need for a structure of the system 600 in which the PV module 620 and the energy storage system 630 are linked, in which the server 610 may operate as an upper control entity, and one of the PV module 620 and the energy storage system 630 may operate as a lower control entity.

In an embodiment, in a first operation mode in which the energy storage system 630 operates as a control entity, and the PV module 620 operates as a control target, through the first communication 602, the energy storage system 630 may receive state information from the PV module 620 (see 623) and may transmit a control signal to the PV module 620 (see 632).

The energy storage system 630 may perform the following power control in the first operation mode according to an embodiment. The energy storage system 630 may control the import of power to a load 640. In addition, the energy storage system 630 may receive a chargeable capacity of a battery (not shown) and a power limit of the PV module from the PV module 620 as state information (see 623) and may limit a power generation amount of the PV module 620 based on the state information. In addition, the energy storage system 630 may monitor export power exported to a power grid 650 through the CT (not shown) described with reference to FIG. 4 and may charge or discharge the battery (not shown) with surplus power, which remains after power is imported by the load 640, based on a monitoring result. In addition, the energy storage system 630 may limit power for a capacity of a distribution panel and power for stabilizing the power grid 650. In addition, the energy storage system 630 may switch the upper control entity to respond to a situation in which a component (for example, a battery or a microinverter) of the PV module 620 is inoperable.

Similarly, in a second operation mode in which the PV module 620 operates as the control entity and the energy storage system 630 operates as the control target, the energy storage system 630 may transmit state information to the PV module 620 (see 632) and may receive a control signal from the PV module 620 (see 623).

In the second operation mode according to an embodiment, the PV module 620 (for example, a power control device (not shown) of the PV module 620) may perform the following power control. The PV module 620 may control the import of power to the load 640. In addition, after the import of power to the load 640 and maximum power point tracking (MPPT), the PV module 620 may monitor export power exported to the power grid 650 through the CT (not shown) described with reference to FIG. 4. Afterwards, a power generation amount may be controlled based on a monitoring result. For example, when an amount of export power is greater than a preset value, the PV module 620 may limit a power generation amount. In addition, the PV module 620 may transmit target power and discharge limit values as state information to the energy storage system 630 (see 632) and may charge or discharge the battery (not shown) with surplus power, which remains after power is imported by the load 640, based on the state information. In addition, the PV module 620 may limit power for a capacity of the distribution panel and power for stabilizing the power grid 650. In addition, the PV module 620 may switch the upper control entity to respond to a situation in which a component (for example, a digital signal processor or inverter) of the energy storage system 630 is inoperable.

In this way, by flexibly switching a control entity according to operation modes, a power generation amount of the PV module 620 may be controlled by the energy storage system 630 in the first operation mode, and a charge/discharge amount of the energy storage system 630 may be controlled by the PV module 620 in the second operation mode.

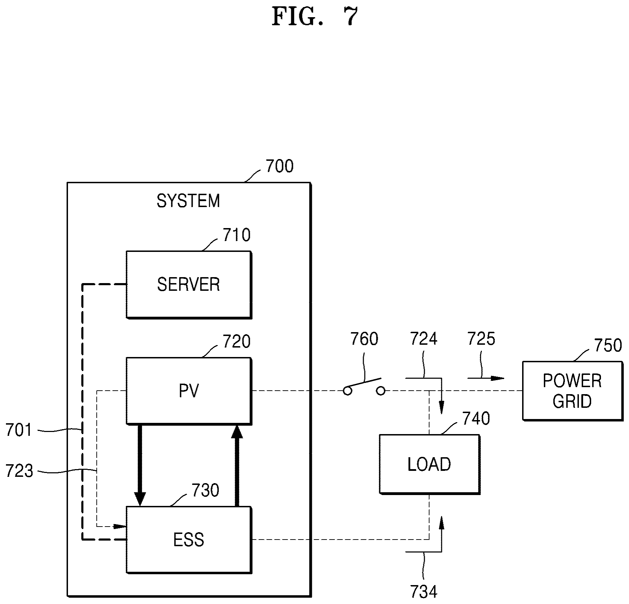

FIG. 7 is a diagram for describing a first operation mode according to an embodiment of the present disclosure.

Referring to FIG. 7, a system 700 may further include a circuit breaker 760 positioned between a PV module 720 and a load 740. As an example, the circuit breaker may be a magnetic contactor.

In an embodiment, in the first operation mode, an energy storage system 730 may control a photovoltaic power generation amount of the PV module 720 by using the circuit breaker 760. Specifically, the energy storage system 730 may monitor export power 725 exported to a power grid 650 through a CT (not shown) and may block the circuit breaker 760 based on a monitoring result to limit a photovoltaic power generation amount of the PV module 720 or limit the photovoltaic power generation amount from being exported to the power grid 750. As an example, in response to the export power 725 being detected to have a value that is greater than or equal to a preset value, the energy storage system 730 may maintain the stability of the system 700 and the power grid 750 and prevent overload by blocking the circuit breaker 760.

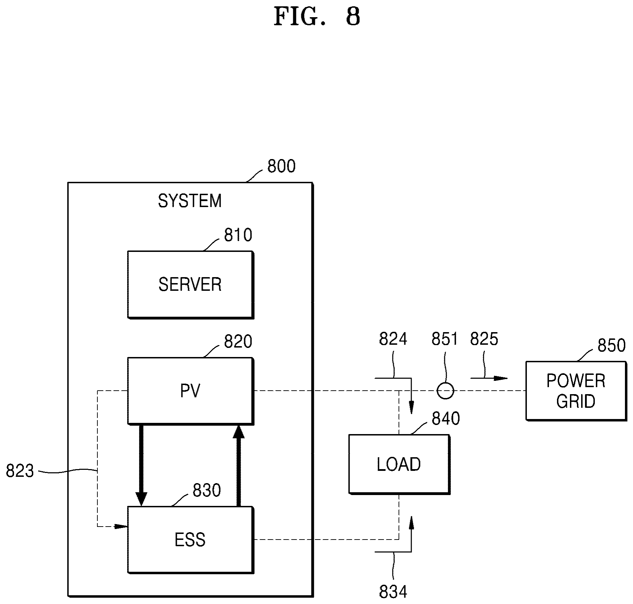

FIG. 8 is a diagram for describing a second operation mode according to an embodiment of the present disclosure.

Referring to FIG. 8, a system 800 may further include a CT 851 disposed between a load 840 and a power grid 850 and connected to a PV module 820.

In an embodiment, in the second operation mode, by using the CT 851, the PV module 820 may control a photovoltaic power generation amount to minimize power imported from the power grid 850 and export power 825 exported to the power grid 850. Specifically, the PV module 820 may control a photovoltaic power generation amount such that a current detected by the CT 851 becomes 0. As an example, by using the CT 851, the PV module 820 may limit a photovoltaic power generation amount when the export power 825 exported to the power grid 850 is detected. On the other hand, when power imported from the power grid 850 is detected, by using the CT 851, the PV module 820 may increase a photovoltaic power generation amount to increase an amount of power imported by the load 840. Through such a mechanism, in the second operation mode, the PV module 820 may self-control a photovoltaic power generation amount without a control signal from an energy storage system 830.

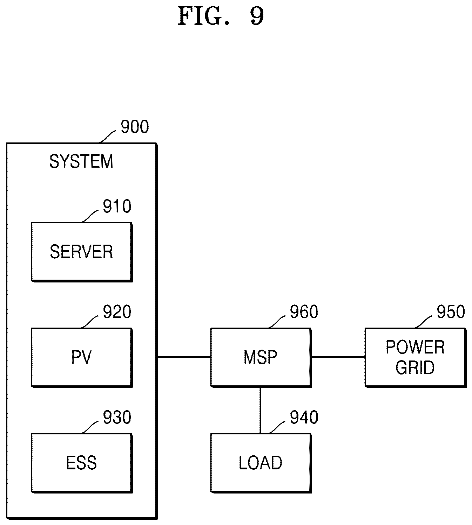

FIG. 9 is an exemplary diagram of implementation of a device for controlling a photovoltaic power generation system according to an embodiment of the present disclosure.

Referring to FIG. 9, a device 960 for controlling a system 900 (hereinafter referred to as "device") is shown. For example, the device 960 may be a main service provider (MSP). The device 960 may control the operation or power supply of the system 900 as described above with reference to FIGS. 1 to 8, specifically, a server 910, a PV module 920, and an energy storage system 930.

In an embodiment, power imported from the system 900 to a load 940 and a power grid 950 may be monitored or controlled by the device 960. As an example, the device 960 may collect and monitor various types of data about the system 900, such as a power generation amount of the system 900, a state of an inverter, and an interaction with the power grid 950.

In an embodiment, the device 960 may analyze the collected data to evaluate and optimize the performance of the system 900, thereby improving the efficiency of the system 900 and maximizing an energy production amount.

In an embodiment, the device 960 may detect an abnormal situation of the system 900 and may generate a related notification or warning. As an example, the device 960 may detect an inoperable state of some components included in the PV module 920 or the energy storage system 930 and may switch a control entity.

In this way, the device 960 may control a photovoltaic power generation system according to an embodiment.

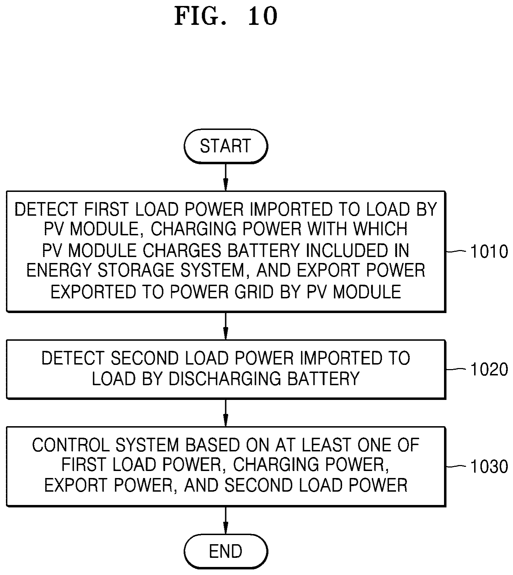

FIG. 10 is a flowchart of a method of controlling a photovoltaic power generation system according to an embodiment of the present disclosure.

A device for controlling a photovoltaic power generation system (hereinafter referred to as "device") may be a device for controlling a system according to an embodiment described above with reference to FIGS. 1 to 9. For example, the device may be the MSP of FIG. 9.

In operation 1010, the device may detect first load power imported to a load by a PV module, charging power with which the PV module charges a battery included in an energy storage system, and export power exported to a power grid by the PV module.

In operation 1020, the device may detect charging power for charging the battery and second load power imported by the load by discharging the battery.

In operation 1030, the device may control a system based on at least one of the first load power, the charging power, the export power, and the second load power.

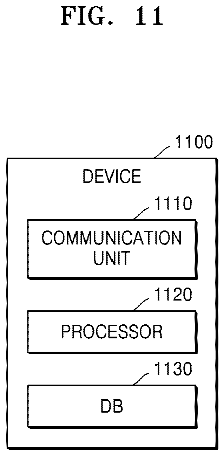

FIG. 11 is a block diagram of a device for controlling a photovoltaic power generation system according to an embodiment of the present disclosure.

Referring to FIG. 11, a device 1100 may include a communication unit 1110, a processor 1120, and a database (DB) 1130. In the device 1100 of FIG. 11, only components related to the embodiment are shown. Accordingly, it may be understood by a person of ordinary skill in the art that the other general-purpose components may be further included in addition to the components shown in FIG. 11.

The communication unit 1110 may include one or more components that enable wired/wireless communication with an external server or external device. For example, the communication unit 1110 may include at least one of a short-range communication unit (not shown), a mobile communication unit (not shown), and a broadcast receiving unit (not shown).

The DB 1130 may be hardware that stores various types of data processed in the device 1100 and may store a program for processing and control of the processor 1120.

The DB 1130 may include a random access memory (RAM) such as a dynamic random access memory (DRAM) or a static random access memory (SRAM), a read-only memory (ROM), an electrically erasable programmable read-only memory (EEPROM), a compact disk (CD)-ROM, a Blu-ray or other optical disk storage, a hard disk drive (HDD), a solid state drive (SSD), or a flash memory.

The processor 1120 controls the overall operation of the device 1100. For example, the processor 1120 may control the overall operation of an input unit (not shown), a display (not shown), the communication unit 1110, the DB 1130, or the like by executing programs stored in the DB 1130. The processor 1120 may control the operation of the device 1100 by executing the programs stored in the DB 1130.

The processor 1120 may control at least some of the operations of the photovoltaic power generation system described above with reference to FIGS. 1 to 10 or the operations of the device for controlling the photovoltaic power generation system.

The processor 1120 may be implemented by using at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and other electrical units for performing functions.

In an embodiment, the device 1100 may be a server. The server may be implemented as a computer device or a plurality of computer devices that perform communication through a network to provide instructions, codes, files, content, services, or the like.

Meanwhile, an embodiment according to the present disclosure may be implemented in the form of a computer program executable through various components on a computer. Such a computer program may be recorded on a computer-readable medium. In this case, examples of the computer-readable medium may include: magnetic media such as hard disks, floppy disks, and magnetic tapes; optical recording media such as CD-ROMs and digital video disks (DVDs); magneto-optical media such as floptical disks; and hardware devices such as ROMs, RAMs, and flash memories specifically configured to store program instructions and execute the program instructions.

Meanwhile, the computer program may be specially designed and configured for the present disclosure or may be known to and usable by usable by one of ordinary skill in the art of computer software. Examples of the computer program may include advanced language codes that may be executed by a computer by using an interpreter or the like as well as machine language codes made by a compiler.

According to an embodiment, methods according to various embodiments of the present disclosure may be included and provided in a computer program product. The computer program product may be traded as a product between a seller and a buyer. The computer program product may be distributed in the form of a machine-readable storage medium (e.g., CD-ROM), or be distributed (e.g., downloaded or uploaded) online via an application store (e.g., PlayStore^{™}), or between two user devices directly. When distributed online, at least a part of the computer program product may be temporarily generated or at least temporarily stored in the machine-readable storage medium, such as memory of the manufacturer's server, a server of the application store, or a relay server.

When there is no explicit or contradictory description of operations constituting the method according to the present disclosure, the operations may be performed in a suitable order. The present disclosure is not necessarily limited to the order in which the operations are described. The use of all the examples or exemplary terms in the present disclosure is merely for describing the present disclosure in detail. Accordingly, the scope of the present disclosure may not be limited by the examples or exemplary terms, unless limited by the claims. In addition, those skilled in the art may recognize that various modifications, combinations, and changes may be configured according to design conditions and factors within the scope of the appended claims or equivalents thereof.

Therefore, the spirit of the present disclosure should not be limited to the above-described embodiments, and not only the scope of the appended claims but also all ranges equivalent to or equivalently changed from the claims are within the scope of the present disclosure.

## Claims

1. A photovoltaic power generation system comprising:
a PV module configured to produce power;
an energy storage system (ESS) configured to perform first communication with the PV module; and
a server configured to perform second communication with the PV module and the ESS,
wherein at least one of the ESS, the PV module, and the power grid is further configured to allow a load to import power.

2. The photovoltaic power generation system of claim 1, wherein generated power generated by the PV module comprises first load power imported by the load, charging power for charging a battery included in the ESS, and export power exported to the power grid, and
the battery is charged based on the charging power and discharged based on the second load power imported by the load.

3. The photovoltaic power generation system of claim 1, wherein the first communication is controller area network (CAN) communication, and
the second communication is Ethernet communication.

4. The photovoltaic power generation system of claim 1, wherein, in a first operation mode in which the ESS operates as a control entity and the PV module operates as a control target, the ESS is further configured to receive state information from the PV module and transmit a control signal to the PV module through the first communication.

5. The photovoltaic power generation system of claim 4, comprising a main circuit breaker disposed between the PV module and the load,
wherein, in the first operation mode, the ESS is further configured to control a photovoltaic power generation amount of the PV module by using the main circuit breaker.

6. The photovoltaic power generation system of claim 5, wherein, in the first operation mode, the ESS is further configured to control the photovoltaic power generation amount of the PV module by blocking the main circuit breaker in response to export power being detected to have a value that is greater than or equal to a preset value.

7. The photovoltaic power generation system of claim 1, wherein, in a second operation mode in which the PV module operates as a control entity and the ESS operates as a control target, the PV module is further configured to receive state information from the ESS and transmit a control signal to the ESS.

8. The photovoltaic power generation system of claim 7, comprising a current transformer (CT) disposed between the load and the power grid and connected to the PV module,
wherein, in the second operation mode, the PV module is further configured to control a photovoltaic power generation amount by using the CT.

9. The photovoltaic power generation system of claim 8, wherein, in the second operation mode, the PV module is further configured to control the photovoltaic power generation amount to minimize power, which is imported from the power grid, detected by the CT, and export power exported to the power grid, which is detected by the CT.

10. A method of controlling the system of claim 1, the method comprising:
detecting first load power imported by the load from the PV module, charging power with which the PV module charges a battery included in the ESS, and export power exported to the power grid by the PV module;
detecting charging power for charging the battery and second load power imported by the load by discharging the battery; and
controlling the system based on at least one of the first load power, the charging power, the export power, the charging power, and the second load power.

11. A device for controlling a photovoltaic power generation system, the device comprising:
a memory in which at least one program is stored; and
a processor configured to perform a calculation by executing the at least one program,
wherein the processor is further configured to:
detect first load power imported by a load from a PV module, charging power with which the PV module charges a battery included in an energy storage system, and export power exported to a power grid by the PV module;
detect a charging power for charging the battery and second load power imported by the load by discharging the battery; and
control the system based on at least one of the first load power, the charging power, the export power, the charging power, and the second load power.
